# EUROPÄISCHE PATENTSCHRIFT

(11) **EP 3 095 588 B1**
(45) Veröffentlichungstag und Bekanntmachung des Hinweises auf die Patenterteilung: **27.12.2017**
(21) Anmeldenummer: 16170926.6
(22) Anmeldetag: 23.05.2016
(51) Int. Cl.: B29C 63/00

(54) **DÜSENANORDNUNG FÜR EINE KANTENSTREIFENAUFBRINGVORRICHTUNG ZUR BEAUFSCHLAGUNG EINES KLEBERLOSEN, WÄRMEAKTIVIERBAREN ODER MIT HEISSKLEBER BESCHICHTETEN KANTENSTREIFENS ODER WERKSTÜCKS MIT EINEM HEIZMEDIUM UND KANTENSTREIFENAUFBRINGVORRICHTUNG MIT EINER DÜSENANORDNUNG**
NOZZLE ASSEMBLY FOR AN EDGE STRIP APPLICATION DEVICE FOR APPLYING AN EDGE STRIP WHICH IS ADHESIVE-FREE, HEAT-ACTIVABLE OR COATED WITH HOT ADHESIVE OR WORKPIECE WITH A HEATING MEDIUM AND EDGE STRIP APPLICATION DEVICE HAVING A NOZZLE ASSEMBLY
SYSTEME DE BUSE POUR UN DISPOSITIF D'APPLICATION DE BANDES DE REBORDS DESTINE A APPLIQUER UNE BANDE DE REBORD REVETUE DE COLLE CHAUDE OU THERMOPLASTIQUE OU SANS ADHESIF OU D'UNE PIECE REVETUE D'UN MOYEN D'ADHERENCE ET DISPOSITIF D'APPLICATION DE BANDES DE REBORDS COMPRENANT UN SYSTEME DE BUSE

(30) Priorität: 22.05.2015 DE 102015108199
(43) Veröffentlichungstag der Anmeldung: 23.11.2016
(73) Patentinhaber: Kluge, Holger, 57392 Schmallenberg (DE)
(72) Erfinder: Kluge, Holger, 57392 Schmallenberg (DE)
(74) Vertreter: Manske, Jörg

(56) Entgegenhaltungen:
- WO-A1-2013/076205
- US-A- 4 222 812
- US-A- 4 849 063

## Beschreibung

Die vorliegende Erfindung betrifft eine Düsenanordnung für eine Kantenstreifenaufbringvorrichtung zur Beaufschlagung eines kleberlosen, wärmeaktivierbaren oder mit Heißkleber beschichteten Kantenstreifens oder Werkstücks mit einem Heizmedium, insbesondere mit Heißluft, nach dem Oberbegriff des Anspruchs 1. Darüber hinaus betrifft die vorliegende Erfindung eine Kantenstreifenaufbringvorrichtung mit einer Düsenanordnung.

Aus dem Stand der Technik sind Kantenstreifenaufbringvorrichtungen (häufig auch als Kantenanleimvorrichtungen bezeichnet), mittels derer Kantenstreifen auf die Schmalseiten eines Werkstücks aufgebracht werden können, in unterschiedlichen Ausführungsformen bekannt. Die Kantenstreifen, die häufig auch als Umleimer bezeichnet werden, können zum Beispiel einseitig einen wärmeaktivierbaren Kleber aufweisen. Dieser Kleber wird in der Kantenstreifenaufbringvorrichtung durch Beaufschlagung mit einem Heizmedium, insbesondere mit Heißluft oder einem Heizgas, aktiviert, so dass nach dem Aufbringen und Andrücken des Kantenstreifens auf die Schmalseite des Werkstücks eine stoffschlüssige Fügeverbindung des Kantenstreifens mit dieser Schmalseite geschaffen wird. Teilweise werden die Kantenstreifen erst in der Kantenstreifenaufbringvorrichtung einseitig mit einem Kleber versehen und anschließend mit der Schmalseite des Werkstücks, das insbesondere ein Holzwerkstück sein kann, stoffschlüssig verbunden. Es hat sich gezeigt, dass die Verwendung von Klebern bei der Aufbringung von Kantenstreifen auf die Schmalseiten eines Werkstücks mit einigen Nachteilen verbunden ist. Neben prozesstechnischen Schwierigkeiten besteht häufig das Problem, dass die Kleberschicht nach dem Aufbringen des Kantenstreifens auf das Werkstück für einen Betrachter sichtbar bleibt und so das optische Erscheinungsbild beeinträchtigt.

Um den vorstehend genannten Problemen abzuhelfen, wurden mittlerweile kleberlose, wärmeaktivierbare Kantenstreifen entwickelt, die zum Beispiel durch Beaufschlagung mit Laserlicht oder durch Plasmaverfahren aktiviert werden können. Diese Kantenstreifen bestehen aus zwei Schichten aus unterschiedlichen - vorzugsweise koextrudierten - Kunststoffen. Durch die Beaufschlagung mit Laserlicht wird die der Schmalseite des Werkstücks zugewandte Kunststoffschicht (kurz: Funktionsschicht) aufgeschmolzen und kann mit der Schmalseite verklebt werden. Die Kunststoffschicht auf der Sichtseite (Außenseite) des Kantenstreifens wird demgegenüber durch die Beaufschlagung mit dem Laserlicht nicht verändert. Da sich die beiden Kunststoffschichten zweckmäßigerweise in ihrer Farbgebung nicht unterscheiden, wird ein fugenloses, einheitliches optisches Erscheinungsbild geschaffen.

Laservorrichtungen zum Aktivieren der Funktionsschicht des Kantenstreifens ermöglichen zwar hohe Arbeitsgeschwindigkeiten, sind aber verhältnismäßig teuer und prozesstechnisch aufwändig zu betreiben. Die aus dem Stand der Technik bereits bekannte Möglichkeit zur Aktivierung der Funktionsschicht durch ein Plasma ist ebenfalls prozesstechnisch sehr aufwändig und ermöglicht nur vergleichsweise geringe Arbeitsgeschwindigkeiten. Daher wurden in der Vergangenheit bereits einige Anstrengungen unternommen, um die Funktionsschicht des Kantenstreifens mittels einer Düsenanordnung mit unter Druck stehender Heißluft mit einer Temperatur von etwa 600° C zu beaufschlagen und zu aktivieren. Im Vergleich zur Laser- und Plasmaaktivierung ist eine derartige Vorgehensweise prozesstechnisch einfacher und kostengünstiger. Die dabei erreichbaren Arbeitsgeschwindigkeiten waren jedoch anfangs noch nicht zufriedenstellend. So sind für industrielle Anwendungen Arbeitsgeschwindigkeiten von 20 m/min und mehr wünschenswert.

Aus der WO 2013/076205 A1 sind eine Düsenanordnung der eingangs genannten Art sowie eine damit ausgerüstete Kantenstreifenaufbringvorrichtung bekannt, mittels derer derartig hohe Arbeitsgeschwindigkeiten erreicht und sogar übertroffen werden können.

Die aus der WO 2013/076205 A1 bekannte Düsenanordnung umfasst einen Düsenkörper mit mindestens einem Lufteinlassbereich, der an ein Heizmediumzufuhrrohr angeschlossen ist, so dass dem Düsenkörper während des Betriebs der Kantenstreifenaufbringvorrichtung ein unter Druck stehendes Heizmedium, insbesondere Heißluft, zugeführt werden kann. Ferner umfasst der Düsenkörper mindestens zwei Gruppen von Luftaustrittsöffnungen, wobei die Luftaustrittsöffnungen auf einer dem Kantenstreifen zugewandten Vorderseite des Düsenkörpers in vertikaler Richtung senkrecht zu einer Vorschubrichtung des Kantenstreifens voneinander beabstandet ausgebildet sind und mit dem mindestens einen Lufteinlassbereich in Strömungsverbindung stehen. Die mindestens zwei Gruppen von Luftaustrittsöffnungen sind in Vorschubrichtung des Kantenstreifens voneinander beabstandet, so dass das dem Düsenkörper zugeführte Heizmedium aus den Luftaustrittsöffnungen der beiden Gruppen ausströmen kann und eine wärmeaktivierbare Funktionsschicht des Kantenstreifens beaufschlagen kann.

Der Düsenkörper der Düsenanordnung weist darüber hinaus eine der Anzahl der Gruppen von Luftaustrittsöffnungen auf der Vorderseite des Düsenkörpers entsprechende Anzahl von Verschlussorganen auf, die so ausgebildet sind, dass zumindest einige der Luftaustrittsöffnungen wahlweise geöffnet oder geschlossen werden können, so dass die Ausströmung des Heizmediums an unterschiedliche Breiten des zugeführten Kantenstreifens angepasst werden kann. Die Verschlussorgane können insbesondere so ausgebildet sein, dass sie in den Luftauslasskanälen zum Verschließen zumindest einiger der Luftaustrittsöffnungen axial geführt werden können.
Die aus dem Stand der Technik bekannte Düsenanordnung umfasst vorzugsweise eine Verschlussorganhalterung, an der die Verschlussorgane derart angebracht sind, dass sie simultan in den Luftauslasskanälen verstellbar sind. Alternativ kann vorgesehen sein, dass die Düsenanordnung eine Verschlussorganhalterung umfasst, an der die Verschlussorgane derart angebracht sind, dass zumindest eines der Verschlussorgane unabhängig von den übrigen Verschlussorganen verstellbar ist.

Die vorliegende Erfindung macht es sich zur Aufgabe, eine Düsenanordnung sowie eine Kantenstreifenaufbringvorrichtung der eingangs genannten Art zur Verfügung zu stellen, die verbesserte thermische Eigenschaften aufweisen.

Die Lösung dieser Aufgabe liefert eine gattungsgemäße Düsenanordnung mit den Merkmalen des kennzeichnenden Teils des Anspruchs 1. Die Unteransprüche betreffen vorteilhafte Weiterbildungen der Erfindung.

Eine erfindungsgemäße Düsenanordnung zeichnet sich dadurch aus, dass innerhalb des Düsenkörpers zumindest ein Heizelement angeordnet ist, mittels dessen der Düsenkörper beheizbar ist, und/oder dass innerhalb des Heizmediumzufuhrrohrs mindestens ein Heizelement angeordnet ist, mittels dessen das Heizmediumzufuhrrohr zumindest abschnittsweise beheizbar ist. Durch die zusätzliche aktive Beheizung des Düsenkörpers und/oder des Heizmediumzufuhrrohrs können die thermischen Eigenschaften der Düsenanordnung deutlich verbessert werden. So ist es zum Beispiel möglich, den Düsenkörper und/oder das Heizmediumzufuhrrohr vorzuheizen, bevor das unter Druck stehende Heizmedium durch das Heizmediumzufuhrrohr in den Düsenkörper strömt. Mittels des zumindest einen zusätzlichen Heizelements kann der Düsenkörper der Düsenanordnung in vorteilhafter Weise auf seine Betriebstemperatur aufgeheizt werden oder auf diesem Temperaturniveau gehalten werden. Der wesentliche Vorteil besteht darin, dass keine Abkühlung des Heizmediums, insbesondere der Heißluft, beim Hindurchtritt durch den Düsenkörper erfolgt. Dadurch ist ein energiesparender Betrieb der Düsenanordnung möglich. Entsprechende Vorteile ergeben sich auch bei der aktiven Beheizung des Heizmediumzufuhrrohrs, die alternativ oder in besonders vorteilhafter Weise zusätzlich zu der aktiven Beheizung des Düsenkörpers erfolgen kann.

Um eine homogene Erwärmung des Düsenkörpers zu erreichen, wird in einer bevorzugten Ausführungsform vorgeschlagen, dass sich das mindestens eine Heizelement in vertikaler Richtung bis zum Boden des Düsenkörpers erstreckt.

In einer besonders bevorzugten Ausführungsform wird vorgeschlagen dass das mindestens eine Heizelement des Düsenkörpers als elektrische Heizpatrone ausgebildet ist. Derartige elektrische Heizpatronen sind kostengünstig und lassen sich auf einfache Weise in entsprechend ausgeführten Bohrungen des Düsenkörpers montieren.

Um eine homogene Erwärmung des Düsenkörpers zu erreichen, wird in einer bevorzugten Ausführungsform vorgeschlagen, dass der Düsenkörper mehrere Heizelemente aufweist. Alle diese Heizelemente, die an unterschiedlichen Orten innerhalb des Düsenkörpers angeordnet sind, sind vorzugsweise als elektrische Heizpatronen ausgebildet.

In einer besonders bevorzugten Ausführungsform kann vorgesehen sein, dass das mindestens eine Heizelement, das innerhalb des Heizmediumzufuhrrohrs angeordnet ist, als Heizspirale oder Heizdraht ausgebildet ist.

Um einen elektrischen und mechanischen Kontakt des mindestens einen Heizelements mit dem Heizmediumzufuhrrohr zu verhindern, wird in einer vorteilhaften Ausführungsform vorgeschlagen, dass innerhalb des Heizmediumzufuhrrohrs ein Isolationsmittel angeordnet ist, das sich zwischen dem mindestens einen Heizelement und einer inneren Wandung des Heizmediumzufuhrrohrs erstreckt.

Vorzugsweise kann das Isolationsmittel durch ein hochtemperaturfestes, vorzugsweise zylindrisches, Keramikelement gebildet sein. Das Keramikelement ist vorzugsweise so ausgebildet, dass es ein oder mehrere Heizelemente, insbesondere Heizspiralen, in axialer Richtung aufnehmen und führen kann.

In einer alternativen Ausführungsform besteht auch die Möglichkeit, dass das Isolationsmittel durch eine Mehrzahl hochtemperaturfester, vorzugsweise ringförmiger, Keramikelemente gebildet ist, die in axialer Richtung des Heizmediumzufuhrrohrs nebeneinander angeordnet sind. Diese segmentartigen, ringförmig ausgebildeten Keramikelemente sind vorzugsweise so ausgebildet, dass sie ein oder mehrere Heizelemente, insbesondere Heizspiralen, in axialer Richtung aufnehmen und führen können. Durch die einzelnen Keramikelemente kann das Heizmediumzufuhrrohr zu einem späteren Zeitpunkt in vorteilhafter Weise noch gebogen werden.

Vorzugsweise kann das Heizmediumzufuhrrohr zumindest eine Durchführung aufweisen, durch die sich zumindest ein elektrischer Leitungsabschnitt des Heizelements des Heizmediumzufuhrrohrs hindurch erstreckt. Die mindestens eine Durchführung kann in einer vorteilhaften Ausführungsform mit einem Hochtemperatur-Zementwerkstoff oder einem Hochtemperatur-Kunststoff abgedichtet und verschlossen sein.

In einer besonders bevorzugten Ausführungsform wird vorgeschlagen, dass das mindestens eine Heizelement des Heizmediumzufuhrrohrs hinsichtlich seiner thermischen Leistung so dimensioniert ist, dass es ein unter Druck stehendes, nicht vorerwärmtes Heizmedium, das durch das Heizmediumzufuhrrohr strömt, zumindest auf seine Solltemperatur, mit der es aus den Luftaustrittsöffnungen austritt und den Kantenstreifen beaufschlagt, erhitzen kann. Somit kann das beheizte Heizmediumzufuhrrohr in dieser Ausführungsform selbst als Heizvorrichtung dienen, um das unter Druck stehende, nicht zwingend vorgewärmte Heizmedium, das aus einem entsprechenden Reservoir zugeführt wird, zu erhitzen.

In einer vorteilhaften Weiterbildung besteht die Möglichkeit, dass der Düsenkörper auf seiner Rückseite, die der Vorderseite gegenüberliegt, zumindest eine dritte Gruppe von Luftaustrittsöffnungen aufweist, die vorzugsweise in vertikaler Richtung voneinander beabstandet übereinander angeordnet sind. Grundsätzlich können der Durchmesser und die Anzahl der einzelnen Luftaustrittsöffnungen der dritten Gruppe unterschiedlich gewählt werden. In alternativen Ausführungsformen können an der Rückseite des Düsenkörpers auch zwei oder mehr Gruppen von Luftaustrittsöffnungen vorgesehen sein. Die Luftaustrittsöffnungen der dritten Gruppe auf der Rückseite des Düsenkörpers dienen insbesondere dem Zweck, ein Aufheizen beziehungsweise Vorerwärmen des Werkstücks, das mit dem Kantenstreifen versehen werden soll, zu bewirken.

Die Luftaustrittsöffnungen der dritten Gruppe können auch zum Aufschmelzen/Aktivieren eines Schmelzklebers oder eines ähnlichen Werkstoffs am Werkstück beziehungsweise Plattenmaterial vorgesehen sein, der zur Verklebung der Kantenstreifen, nachbeschichteten Kantenstreifen oder koextrudierten Kantenstreifen dient. Dabei wird nicht der Kantenstreifen durch das Heizmedium aktiviert, sondern es wird hierbei ein Schmelzkleber oder eine Beschichtung des Werkstücks/Plattenmaterials aufgeschmolzen oder aktiviert. Ebenso ist es mittels des in dieser Weise ausgestalteten Düsenkörpers möglich, einen vorbeschichteten Kantenstreifen mit Hilfe der Luftaustrittsöffnungen der ersten und zweiten Gruppe und ein vorbeschichtetes Werkstück/Plattenmaterial mittels der Luftaustrittsöffnungen der dritten Gruppe gleichzeitig zu aktivieren oder aufzuschmelzen, um sie dann anschließend miteinander zu verbinden. Die Luftaustrittsöffnungen der dritten Gruppe auf der Rückseite des Düsenkörpers können ebenso zum Sauberblasen und/oder Vorheizen einer Schnittkante des Werkstücks vorgesehen sein. Dieses kann zu einer höheren Festigkeit der stoffschlüssigen Fügeverbindung des Kantenstreifens mit dem Werkstück führen.

Vorzugsweise können die Luftaustrittsöffnungen der dritten Gruppe mittels des Verschlussorgans der ersten Gruppe oder der zweiten Gruppe selektiv geöffnet oder geschlossen werden, so dass die Ausströmung des Heizmediums auf der Rückseite des Düsenkörpers an unterschiedliche Breiten des zugeführten Werkstücks angepasst werden kann.

In einer alternativen Ausführungsform besteht auch die Möglichkeit, dass die Luftaustrittsöffnungen der dritten Gruppe mittels eines diesen zugeordneten Verschlussorgans selektiv geöffnet oder geschlossen werden können, so dass die Ausströmung des Heizmediums auf der Rückseite des Düsenkörpers an unterschiedliche Breiten des zugeführten Werkstücks angepasst werden kann.

Gemäß Anspruch 15 wird die der vorliegenden Erfindung zugrundeliegende Aufgabe darüber hinaus durch eine Kantenstreifenaufbringvorrichtung gelöst, die mindestens eine Düsenanordnung nach einem der Ansprüche 1 bis 14 umfasst.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer Düsenanordnung, die gemäß einem bevorzugten Ausführungsbeispiel der vorliegenden Erfindung ausgeführt ist,
- Fig. 2: die weitere perspektivische Ansicht der Düsenanordnung gemäß Fig. 1,
- Fig. 3: einen Längsschnitt durch ein Heizmediumzufuhrrohr, der Düsenanordnung,
- Fig. 4: einen Querschnitt durch das Heizmediumzufuhrrohr,
- Fig. 5: eine perspektivische Darstellung eines Heizelements eines Düsenkörpers der Düsenanordnung.

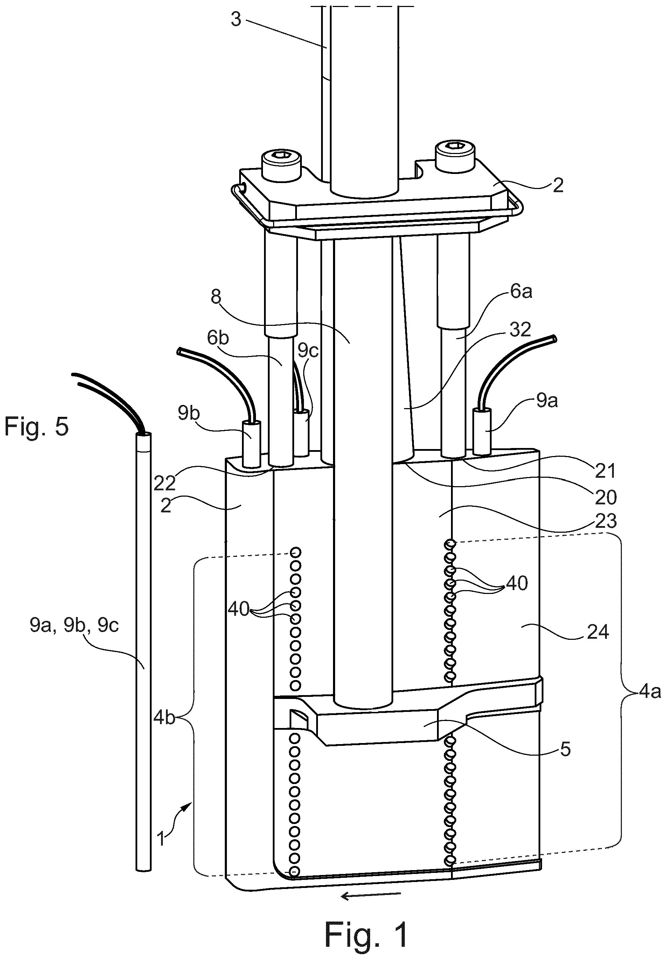

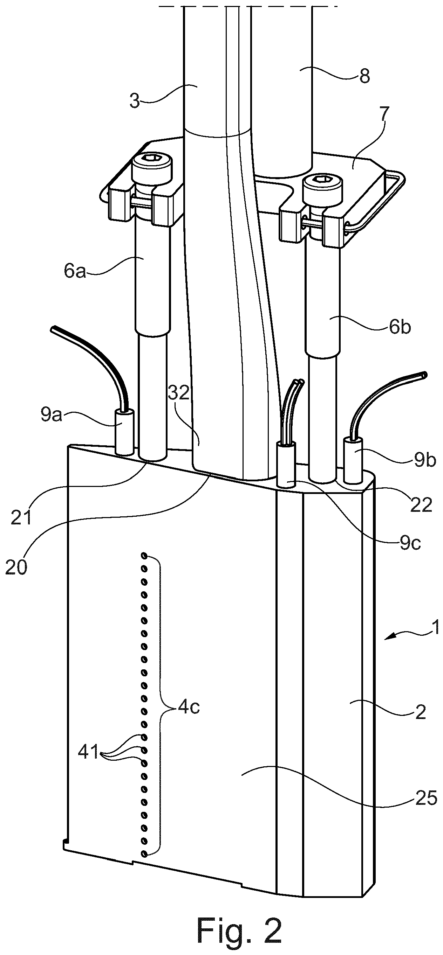

Unter Bezugnahme auf Fig. 1 und 2 soll nachfolgend der grundlegende konstruktive Aufbau einer Düsenanordnung 1 für eine Kantenstreifenaufbringvorrichtung zur Beaufschlagung eines kleberlosen, wärmeaktivierbaren Kantenstreifens mit einem Heizmedium, insbesondere mit Heißluft, gemäß einem bevorzugten Ausführungsbeispiel der vorliegenden Erfindung näher erläutert werden.

Die Düsenanordnung 1 umfasst einen Düsenkörper 2, der in diesem Ausführungsbeispiel einstückig aus einem hitzebeständigen Stahlwerkstoff hergestellt ist. Der Düsenkörper 2 ist so geformt, dass er quer zu einer, in Fig. 1 durch einen Pfeil angedeuteten Vorschubrichtung des hier nicht explizit dargestellten Kantenstreifens vergleichsweise schmal ausgeführt ist, da der in der Kantenstreifenaufbringvorrichtung für die Positionierung der Düsenanordnung 1 zur Verfügung stehende Bauraum üblicherweise relativ knapp bemessen ist. Die Düsenanordnung 1 wird bei der Montage in der Kantenstreifenbearbeitungsvorrichtung vorzugsweise so angeordnet, dass sie in Vorschubrichtung des Kantenstreifens unmittelbar vor einer ersten Kantenstreifenandruckrolle, mittels derer der Kantenstreifen an die Schmalseite des Werkstücks angedrückt werden kann, positioniert ist.

Der Kantenstreifen, der aus Vereinfachungsgründen in Fig. 1 nicht dargestellt wurde, kann zum Beispiel aus (mindestens) zwei Schichten aus unterschiedlichen - vorzugsweise koextrudierten - Kunststoffen bestehen. Eine erste Schicht (nachfolgend: Funktionsschicht), die dem Düsenkörper 2 der Düsenanordnung 1 und damit auch der Schmalseite des Werkstücks zugewandt ist, besteht aus einem Kunststoff, der durch eine Beaufschlagung mit einem unter Druck stehenden Heizmedium, insbesondere mit unter Druck stehender Heißluft, aufgeschmolzen und anschließend mit der Schmalseite des Werkstücks stoffschlüssig verbunden werden kann. Die Kunststoffschicht auf der Sichtseite (Außenseite) des Kantenstreifens ist demgegenüber so ausgebildet, dass sie sich durch die Beaufschlagung mit der Heißluft nicht verändert, insbesondere nicht aufschmilzt. Beide Kunststoffschichten des Kantenstreifens unterscheiden sich zweckmäßigerweise nicht in der Farbgebung, so dass nach dem Aufbringen des Kantenstreifens auf das Werkstück ein einheitliches optisches Erscheinungsbild ohne störende Fugen geschaffen wird. Die Verwendung eines mit Heißkleber beschichteten Kantenstreifens ist ebenfalls möglich.

In dem hier gezeigten Ausführungsbeispiel weist der Düsenkörper 2 auf einer Vorderseite 23, die dem Kantenstreifen zugewandt ist, eine erste Gruppe 4a und eine zweite Gruppe 4b von Luftaustrittsöffnungen 40 auf, die in Vorschubrichtung des Katenstreifens voneinander beabstandet sind. Die Luftaustrittsöffnungen 40 jeder dieser beiden Gruppen 4a, 4b sind in der Einbaulage des Düsenkörpers 2 in vertikaler Richtung voneinander beabstandet übereinander angeordnet. Die Luftaustrittsöffnungen 40 weisen vorzugsweise einen Durchmesser von etwa 1 bis 1,5 mm und eine Tiefe im Düsenkörper 2 von etwa 1,5 mm auf. Dadurch wird erreicht, dass die dem Düsenkörper 2 während des Betriebs zugeführte, unter Druck stehende Heißluft punktuell in die Funktionsschicht des Kantenstreifens eingetragen werden kann, so dass diese wirksam aufgeschmolzen werden kann, bevor der Kantenstreifen auf der Schmalseite des Werkstücks zur Anlage gelangt und stoffschlüssig mit dieser verbunden werden kann.

Der Düsenkörper 2 weist an seiner Oberseite einen Lufteinlassbereich 20 auf, der zum Beispiel zwei hohlzylindrische, sich parallel zueinander erstreckende Lufteinlasskanäle umfassen kann, die sich von der Oberseite des Düsenkörpers 2 in vertikaler Richtung nach innen erstrecken und vorzugsweise als Vertikalbohrungen ausgebildet sind. An der Oberseite des Düsenkörpers 2 ist ferner ein Heizmediumzufuhrrohr 3 angeordnet, das zum Beispiel fest mit der Oberseite des Düsenkörpers 2 verschweißt sein kann und vorliegend in einem Anschlussbereich 32 abschnittsweise eine länglich ovale Querschnittform aufweist, so dass der Lufteinlassbereich 20 seitlich umschlossen werden kann. Über dieses Heizmediumzufuhrrohr 3, das zum Beispiel an einen externen Heißlufterzeuger anschließbar ist, kann dem Düsenkörper 2 während des Betriebs ein bis auf etwa 600°C erwärmtes Heizmedium, insbesondere Heißluft, unter hohem Druck zugeführt werden. Dieses Heizmedium kann über den Lufteinlassbereich 20 in den Düsenkörper 2 einströmen. Ferner umfasst der Düsenkörper 2 eine Mehrzahl hier nicht explizit erkennbarer Luftverteilungskanäle, die sich vorzugsweise orthogonal durch die Lufteinlasskanäle und durch zwei sich in vertikaler Richtung erstreckende, ebenfalls hohlzylindrische Luftauslasskanäle 21, 22, die die beiden Gruppen 4a, 4b Luftaustrittsöffnungen 40 umfassen, erstrecken. Dadurch kann sich die zugeführte Heißluft homogen innerhalb des Düsenkörpers 2 verteilen und durch die Luftaustrittsöffnungen 40 der beiden Gruppen 4a, 4b von Luftaustrittsöffnungen 40 austreten und auf die Funktionsschicht des Kantenstreifens treffen, um diese zu erwärmen und aufzuschmelzen. Die Luftverteilungskanäle können zum Beispiel dadurch hergestellt werden, dass in den Düsenkörper 2 entsprechende horizontale Bohrungen eingebracht werden, deren seitliche Öffnungen an der Außenoberfläche anschließend wieder fluiddicht verschweißt werden. Die hohlzylindrischen Luftauslasskanäle 21, 22 sind ebenfalls als Vertikalbohrungen ausgeführt und weisen vorzugsweise eine etwas größere Erstreckung in vertikaler Richtung als die Lufteinlasskanäle auf. Aufgrund der Vielzahl von Lufteinlasskanälen, Luftverteilungskanälen und Luftauslasskanälen 21, 22 weist der Düsenkörper 2 nahezu die Eigenschaften eines Hohlkörpers mit einer entsprechend geringen Masse auf, so dass der einströmenden Heißluft anfangs nur eine vergleichsweise geringe Menge an Wärmeenergie für das Erwärmen des Materials des Düsenkörpers 2 entzogen wird.

Wie oben bereits ausgeführt, muss die Funktionsschicht des Kantenstreifens kurz vor dem Erreichen der ersten Andruckrolle der Kantenstreifenaufbringvorrichtung aktiviert werden, damit der Kantenstreifen stoffschlüssig mit der Schmalseite des Werkstücks verbunden werden kann. Mit anderen Worten muss die Funktionsschicht des Kantenstreifens wenige Zentimeter vor dem Erreichen des ersten Andruckpunktes, der durch die erste Andruckrolle gebildet wird, aufgeschmolzen und damit erweicht worden sein. Da der innerhalb der Kantenstreifenaufbringvorrichtung zur Verfügung stehende Bauraum sehr klein ist, ermöglicht die relativ schmale konstruktive Ausgestaltung des Düsenkörpers 2 einen zuverlässigen, gezielten Wärmeeintrag in die Funktionsschicht des Kantenstreifens. Der Düsenkörper 2 und die zugehörigen Komponenten stellen sicher, dass beim Passieren des Kantenstreifens eine Art Heißluftkanal gebildet wird, der das Heizmedium bis kurz vor dem Erreichen des ersten Andruckpunktes zwischen dem Kantenstreifen und der Schmalseite des Werkstücks hält. Aus den Luftaustrittsöffnungen 40 der beiden Gruppen 4a, 4b tritt das Heizmedium aus und wird in Richtung des Kantenstreifens geleitet.

Um eine sichere Führung des Kantenstreifens bei der Vorschubbewegung zu erreichen, weist der Düsenkörper 2 ferner in einem Einlaufbereich des Kantenstreifens einen abschnittsweise keilförmig angeschrägten, sich in Vorschubrichtung aufweitenden Führungsabschnitt 24 auf, der in diesem Ausführungsbeispiel integral mit dem Düsenkörper 2 ausgebildet ist.

Für eine Führung eines oberen Randabschnitts des Kantenstreifens ist ein Kantenstreifenniederhaltemittel 5 vorgesehen, das in einem, dem Düsenkörper 2 zugewandten randnahen Abschnitt eine vorzugsweise etwa 1,5 mm starke Ausfräsung oder dergleichen aufweist. Der dem Düsenkörper 2 zugewandte Randabschnitt des Kantenstreifenniederhaltemittels 5 ist so geformt, dass er an die Außenkontur des Düsenkörpers 2 angepasst ist. Der Kantenstreifen kann während des Betriebs der Kantenstreifenaufbringvorrichtung mittels eines Kantenstreifenführungsmittels der Kantenstreifenaufbringvorrichtung und des Kantenstreifenniederhaltemittels 5 sicher vor dem Düsenkörper 2 hergeführt werden. Um Beschädigungen, insbesondere das optische Erscheinungsbild beeinträchtigende Kratzer auf einer Sichtseite des Kantenstreifens, zu vermeiden, erfolgt die Führung mit Hilfe des Kantenstreifenführungsmittels und des Kantenstreifenniederhaltemittels 5 vorzugsweise jeweils nur etwa 1,5 mm von der oberen und unteren Kante des Kantenstreifens entfernt. Der Kantenstreifen kann daher bei der Zuführung stets etwa 3 bis 4 mm breiter als die Schmalseite des Werkstücks sein, auf die der Kantenstreifen aufgebracht werden soll. Nach dem Aufbringen des Kantenstreifens auf die Schmalseite des Werkstücks kann der sich bildende Überstand mittels einer geeignet ausgeführten Abtrageinrichtung in der Kantenstreifenaufbringvorrichtung spanend abgetragen werden.

Vorliegend ist der Düsenkörper 2 so ausgeführt, dass er auf seiner dem Kantenstreifen zugewandten Vorderseite 23 zwei Gruppen 4a, 4b von Luftaustrittsöffnungen 40 aufweist. Die Düsenanordnung 1 mit einem derartigen Düsenkörper 2 ist insbesondere für Kantenstreifenaufbringvorrichtungen geeignet, die Fördergeschwindigkeiten von bis zu 20 m/min haben. Düsenkörper 2, die mehr als zwei in Vorschubrichtung des Kantenstreifens voneinander beabstandete Gruppen 4a, 4b von Luftaustrittsöffnungen 40 aufweisen sind insbesondere für Kantenstreifenaufbringvorrichtungen vorgesehen, die besonders hohe Arbeitsgeschwindigkeiten von mehr als 20 m/min haben, um im Ergebnis eine höhere Wärmeabgabe zu realisieren. Wenn der Düsenkörper 2 auf seiner Vorderseite 23 zum Beispiel drei Gruppen 4a, 4b von Luftaustrittsöffnungen 40 aufweist, sind Arbeitsgeschwindigkeiten von 25 m/min und mehr ohne besonderen konstruktiven Aufwand realisierbar. Die Erstreckung des Düsenkörpers 2 in vertikaler Richtung und die Anzahl der Luftaustrittsöffnungen 40 der mindestens zwei Gruppen 4a, 4b werden an die maximal mit der Kantenstreifenaufbringvorrichtung zu verarbeitende Kantenstreifenbreite angepasst.

Um den Heißluftaustritt aus den Luftaustrittsöffnungen 40 regulieren zu können, weist die Düsenanordnung 1 eine der Anzahl der Gruppen 4a, 4b von Luftaustrittsöffnungen 40 auf der Vorderseite 23 entsprechende Anzahl von Verschlussorganen 6a, 6b auf, die vorliegend zylindrisch geformt sind und so ausgebildet sind, dass sie von der Oberseite in die vertikalen Luftauslasskanäle 20, 21 des Düsenkörpers 2 eingesetzt werden können und in diesen axial verschoben und in ihrer Arbeitsposition gehalten werden können. Die Verschlussorgane 6a, 6b sind an einer gemeinsamen Verschlussorganhalterung 7 angebracht, die ihrerseits über ein sich von der Verschlussorganhalterung 7 zu dem Kantenstreifenniederhaltemittel 5 erstreckendes Verbindungsmittel 8 mit dem Kantenstreifenniederhaltemittel 5 verbunden ist. Die Verschlussorgane 6a, 6b erstrecken sich in vertikaler Richtung vorzugsweise bis zur Ausfräsung des Kantenstreifenniederhaltemittels 5. Um die Herstellung der Düsenanordnung 1 zu vereinfachen, können die Verschlussorganhalterung 7, das Verbindungsmittel 8 sowie das Kantenstreifenniederhaltemittel 5 in einer alternativen Ausführungsform auch als einstückiges Bauteil ausgebildet sein.

Abhängig von der Breite des Kantenstreifens können die Luftaustrittsöffnungen 40 mittels der zylindrischen Verschlussorgane 6a, 6b selektiv verschlossen werden, so dass aus ihnen keine Heißluft mehr in die Umgebung ausströmen kann. Die Verschlussorgane 6a, 6b werden dabei so weit in die zylindrischen Luftauslasskanäle 21, 22 eingeführt, dass diejenigen Luftaustrittsöffnungen 40 verschlossen werden, die für die Beaufschlagung der Funktionsschicht des Kantenstreifens mit Heißluft wegen dessen Breite nicht benötigt werden. Mit anderen Worten werden die zur Beaufschlagung eines Kantenstreifens vorgegebener Breite nicht benötigten Luftaustrittsöffnungen 40 der beiden Gruppen 4a, 4b von Luftaustrittsöffnungen 40 durch die Verstellung der diesen zugeordneten Verschlussorgane 6a, 6b derart verschlossen, dass der Kantenstreifen nur über seine tatsächliche Breite mit Heißluft beaufschlagt wird. Da die Verschlussorgane 6a, 6b, die Verschlussorganhalterung 7 sowie das Kantenstreifenniederhaltemittel 5 über das Verbindungsmittel 8 miteinander verbunden sind, ist es durch eine vertikale Verstellung des Kantenstreifenniederhaltemittels 6 auf einfache Weise möglich, die Luftaustrittsöffnungen 40 der ersten und zweiten Gruppe 4a, 4b so zu verschließen, dass nur diejenigen Luftaustrittsöffnungen 40 geöffnet bleiben, die die Funktionsschicht des Kantenstreifens mit dem Heizmedium beaufschlagen können. Durch Einstellung des Kantenstreifenniederhaltemittels 6 kann der Heißluftaustritt aus dem Düsenkörper 2 der Düsenanordnung 1 somit auf sehr einfache Weise an unterschiedliche breite Kantenstreifen angepasst werden.

Diese Düsenanordnung 1, deren grundlegender Aufbau aus der WO 2013/076205 A1 bekannt ist, zeichnet sich insbesondere durch eine kompakte Bauform aus, die es ermöglicht, dass herkömmliche Kantenstreifenaufbringvorrichtungen auf einfache Weise mit der Düsenanordnung 1 ausgerüstet werden können. Ferner ist es wahlweise möglich, dass die mit der Düsenanordnung 1 ausgestattete Kantenstreifenaufbringvorrichtung herkömmlich mit einer Laservorrichtung zum Aktivieren der Funktionsschicht des Kantenstreifens oder aber mit herkömmlichen Kantenstreifen, die mittels eines Heißklebers mit den Schmalseiten eines Werkstücks verbunden werden, betrieben werden kann.

Unter Bezugnahme auf Fig. 2 weist der Düsenkörper 2 auf seiner Rückseite 25 darüber hinaus zumindest eine dritte Gruppe 4c von Luftaustrittsöffnungen 41 auf. Die Luftaustrittsöffnungen 41 der dritten Gruppe 4c sind in der Einbaulage des Düsenkörpers 2 in vertikaler Richtung voneinander beabstandet übereinander angeordnet. Die Luftaustrittsöffnungen 41 der dritten Gruppe können insbesondere einen Durchmesser von etwa 1 bis 1,5 mm und eine Tiefe im Düsenkörper 2 von etwa 1,5 mm aufweisen. Grundsätzlich können der Durchmesser und die Anzahl der einzelnen Luftaustrittsöffnungen 41 der dritten Gruppe 4c unterschiedlich gewählt werden. In alternativen Ausführungsformen können an der Rückseite 25 des Düsenkörpers 2 auch zwei oder mehr Gruppen 4c von Luftaustrittsöffnungen 41 vorgesehen sein.

Die Luftaustrittsöffnungen 41 der dritten Gruppe 4c auf der Rückseite 25 des Düsenkörpers 2 können mittels des ersten Verschlussorgans 6a der beiden Verschlussorgane 6a, 6b zusammen mit den Luftaustrittsöffnungen 40 der ersten Gruppe 4a auf der Vorderseite 23 des Düsenkörpers 2 selektiv verschlossen oder geöffnet werden. Alternativ kann auch ein separates Verschlussorgan vorgesehen sein, mittels dessen die Luftaustrittsöffnungen 41 der dritten Gruppe 4c auf der Rückseite 25 des Düsenkörpers 2 einzeln geöffnet beziehungsweise verschlossen werden können. Die Luftaustrittsöffnungen 41 der dritten Gruppe 4c auf der Rückseite 25 des Düsenkörpers 2 dienen dem Zweck, im geöffneten Zustand ein Aufheizen beziehungsweise Vorerwärmen des Werkstücks, das mit dem Kantenstreifen versehen werden soll, zu bewirken.

Die Luftaustrittsöffnungen 41 der dritten Gruppe 4c, aus denen im geöffneten Zustand das unter Druck stehende Heizmedium, insbesondere Heißluft, austritt, können auch zum Aufschmelzen/Aktivieren eines Schmelzklebers oder eines ähnlichen Werkstoffs am Werkstück beziehungsweise Plattenmaterial vorgesehen sein, der zur Verklebung der Kantenstreifen, nachbeschichteten Kantenstreifen oder koextrudierten Kantenstreifen dient. Dabei wird nicht der Kantenstreifen durch das Heizmedium aktiviert, sondern es wird hierbei ein Schmelzkleber oder eine Beschichtung des Werkstücks/Plattenmaterials aufgeschmolzen oder aktiviert.

Ebenso ist es mittels des in dieser Weise ausgestalteten Düsenkörpers 2 möglich, einen vorbeschichteten Kantenstreifen mit Hilfe der Luftaustrittsöffnungen 40 der ersten und zweiten Gruppe 4a, 4b und ein vorbeschichtetes Werkstück/Plattenmaterial mittels der Luftaustrittsöffnungen 41 der dritten Gruppe 4c gleichzeitig zu aktivieren oder aufzuschmelzen, um sie dann anschließend miteinander zu verbinden. Die Luftaustrittsöffnungen 41 der dritten Gruppe 4c auf der Rückseite 25 des Düsenkörpers 2 können ebenso zum Sauberblasen und/oder Vorheizen einer Schnittkante des Werkstücks vorgesehen sein. Dieses kann zu einer höheren Festigkeit der stoffschlüssigen Fügeverbindung des Kantenstreifens mit dem Werkstück führen.

Um ein zusätzliches Aufheizen des Düsenkörpers 2 unabhängig von der Zufuhr des unter Druck stehenden Heizmediums, insbesondere der unter Druck stehenden Heißluft, zu ermöglichen, weist der Düsenkörper 2 eine Anzahl von Heizelementen 9a, 9b, 9c auf. Wie in Fig. 1 und 2 zu erkennen, sind in diesem Ausführungsbeispiel in den Düsenkörper 2 drei Heizelemente 9a, 9b, 9c eingesetzt, die elektrisch betreibbar sind und vorliegend als Heizpatronen ausgebildet sind. Durch diese Heizelemente (Heizpatronen) 9a, 9b, 9c, die in den Düsenkörper 2 eingebracht sind und von denen eines in Fig. 5 gezeigt ist, kann der Düsenkörper 2 zusätzlich aufgeheizt werden.

Vorliegend erstrecken sich die Heizelemente 9a, 9b, 9c innerhalb des Düsenkörpers 2 in vertikaler Richtung. In einer alternativen Ausführungsform können die Heizelemente 9a, 9b, 9c auch in horizontaler Richtung in den Düsenkörper 2 eingebracht werden. Die Heizelemente 9a, 9b, 9c können verschiedene Längen aufweisen und sich damit unterschiedlich weit in das Innere des Düsenkörpers 2 hinein erstrecken. In diesem Zusammenhang ist es jedoch besonders vorteilhaft, dass sich die Heizelemente 9a, 9b, 9c bis zum Boden des Düsenkörpers 2 erstrecken, um über die gesamte Höhe des Düsenkörpers 2 eine Aufheizung zu bewirken. Die Form der Heizelemente 9a, 9b, 9c kann unterschiedlich gewählt sein. In dem hier gezeigten Beispiel sind die Heizelemente 9a, 9b, 9c zylindrisch ausgebildet, so dass sie auf einfache Weise in entsprechende Bohrungen des Düsenkörpers 2 eingesetzt werden können.

Mittels der zusätzlichen Heizelemente 9a, 9b, 9c kann der Düsenkörper 2 der Düsenanordnung in vorteilhafter Weise auf seine Betriebstemperatur aufgeheizt werden oder auf diesem Temperaturniveau gehalten werden. Der wesentliche Vorteil besteht darin, dass keine Abkühlung des Heizmediums, insbesondere der Heißluft, beim Hindurchtritt durch den Düsenkörper 2 erfolgt. Dadurch ist ein energiesparender Betrieb der Düsenanordnung 1 möglich.

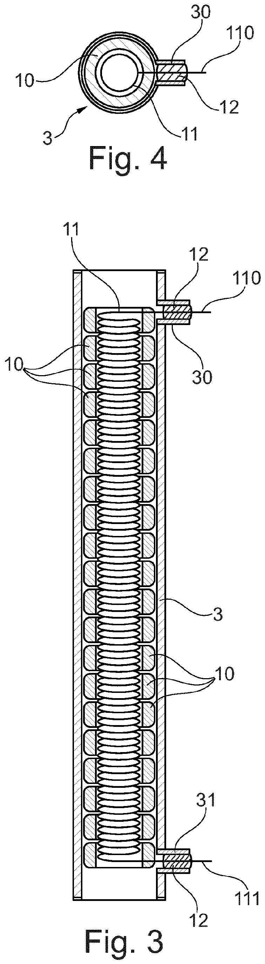

Unter Bezugnahme auf Fig. 3 und 4 besteht ferner die Möglichkeit, dass das Heizmediumzufuhrrohr 3, durch das dem Düsenkörper 2 ein gasförmiges oder flüssiges Heizmedium, insbesondere Heißluft, zugeführt werden kann, zumindest abschnittsweise beheizbar ausgebildet ist. Die Länge und der Durchmesser des beheizbaren Heizmediumzufuhrrohrs 3 beziehungsweise des beheizbaren Abschnitts des Heizmediumzufuhrrohrs 3 sind nicht fest definiert, sondern frei wählbar.

Da das Heizmediumzufuhrrohr 3 die Verbindung zwischen der externen Heizvorrichtung und dem Düsenkörper 2 der Düsenanordnung 1 bildet, muss es nicht zwingend fest mit dem Düsenkörper 1 verbunden sein, insbesondere mit diesem verschweißt sein. Das Heizmediumzufuhrrohr 3 kann ein separates Bauteil sein, das später an dem Düsenkörper 2 montiert werden kann oder nur passgenau eingeschoben werden kann.

Innerhalb des Heizmediumzufuhrrohrs 3 sind zum Zwecke der elektrischen Isolation mehrere hochtemperaturbeständige Keramikelemente 10 angeordnet, die übereinander gestapelt sind (und somit in axialer Richtung des Heizmediumzufuhrrohrs 3 nebeneinander angeordnet sind) und vorzugsweise ringförmig ausgebildet sein können. Ferner ist innerhalb des Heizmediumzufuhrrohrs 3 ein elektrisches Heizelement 11, das vorliegend als Heizspirale ausgebildet ist, angeordnet. Alternativ kann das Heizelement 11 zum Beispiel auch als Heizdraht ausgebildet sein. Ebenso können mehrere Heizdrähte vorgesehen sein. Die Keramikelemente 10 erstrecken sich zwischen dem Heizelement 11 und einer inneren Wandung des Heizmediumzufuhrrohrs 3 und verhindern dadurch einen elektrischen sowie einen mechanischen Kontakt des Heizelements 11 mit dem Heizmediumzufuhrrohr 3. Seitlich am Heizmediumzufuhrrohr 3 sind vorliegend zwei Durchführungen 30, 31 ausgebildet, die einen Durchgang elektrischer Leitungsabschnitte 110, 111 des Heizelements 11 ermöglichen. Die beiden Durchführungen 30, 31 sind vorzugsweise mit einem Hochtemperatur-Zementwerkstoff 12 oder einem Hochtemperatur-Kunststoff abgedichtet und verschlossen.

Die ringförmigen Keramikelemente 10 sind segmentartig ausgebildet und können als relativ flache bis hin zu hohen Segmenten ausgebildet sein. Die Form kann unterschiedlich gewählt sein. Wichtig ist, dass die Keramikelemente 10 ein oder mehrere Heizelemente 11, insbesondere Heizspiralen, in axialer Richtung aufnehmen und führen können. Durch die Verwendung einzelner segmentartig ausgebildeter Keramikelemente 10 kann das Heizmediumzufuhrrohr 3 zu einem späteren Zeitpunkt noch gebogen werden. Das mindestens eine Heizelement 11 dient zum Aufheizen des Heizmediumzufuhrrohrs 3, welches den Düsenkörper 2 mit der externen Heizvorrichtung verbindet, sowie des gasförmigen oder flüssigen Heizmediums, das durch das Heizmediumzufuhrrohr 3 hindurchströmt. Auf diese Weise kann das Heizmedium in besonders vorteilhafter Weise ohne Temperaturverluste von der Heizvorrichtung 11 des Heizmediumzufuhrrohrs 3 zum Düsenkörper 2 übertragen werden.

Das mindestens eine Heizelement 11, das insbesondere als Heizspirale ausgebildet sein kann, kann hinsichtlich ihrer thermischen Leistung auch so dimensioniert sein, dass auf eine externe Heizvorrichtung, die das unter Druck stehende Heizmedium erhitzt, verzichtet werden kann. So kann das beheizte Heizmediumzufuhrrohr 3 selbst als Heizvorrichtung dienen, um das unter Druck stehende, nicht zwingend vorgewärmte Heizmedium, das aus einem entsprechenden Reservoir zugeführt wird, zu erhitzen.

## Patentansprüche

1. Düsenanordnung (1) für eine Kantenstreifenaufbringvorrichtung zur Beaufschlagung eines kleberlosen, wärmeaktivierbaren oder mit Heißkleber beschichteten Kantenstreifens oder Werkstücks mit einem Heizmedium, insbesondere mit Heißluft, umfassend einen Düsenkörper (2) mit
- mindestens einem Lufteinlassbereich (20), der an ein Heizmediumzufuhrrohr (3) angeschlossen ist, so dass dem Düsenkörper (2) während des Betriebs der Kantenstreifenaufbringvorrichtung ein unter Druck stehendes Heizmedium, insbesondere Heißluft, zugeführt werden kann,
- mindestens zwei Gruppen (4a, 4b) von Luftaustrittsöffnungen (40), wobei die Luftaustrittsöffnungen (40) auf einer dem Kantenstreifen zugewandten Vorderseite (23) des Düsenkörpers (2) in vertikaler Richtung senkrecht zu einer Vorschubrichtung des Kantenstreifens voneinander beabstandet ausgebildet sind und mit dem mindestens einen Lufteinlassbereich (20) in Strömungsverbindung stehen, so dass die mindestens zwei Gruppen (4a, 4b) von Luftaustrittsöffnungen (40) in Vorschubrichtung des Kantenstreifens voneinander beabstandet sind und das dem Düsenkörper (2) zugeführte Heizmedium aus den Luftaustrittsöffnungen (40) ausströmen kann und eine wärmeaktivierbare Funktionsschicht des Kantenstreifens (2) beaufschlagen kann,
- einer der Anzahl der Gruppen (4a, 4b) von Luftaustrittsöffnungen (40) auf der Vorderseite (23) entsprechenden Anzahl von Verschlussorganen (6a, 6b), die so ausgebildet sind, dass zumindest einige der Luftaustrittsöffnungen (40) wahlweise geöffnet oder geschlossen werden können, so dass die Ausströmung des Heizmediums an unterschiedliche Breiten des zugeführten Kantenstreifens angepasst werden kann, **dadurch gekennzeichnet, dass** innerhalb des Düsenkörpers (2) zumindest ein Heizelement (9a, 9b, 9c) angeordnet ist, mittels dessen der Düsenkörper (2) beheizbar ist, und/oder dass innerhalb des Heizmediumzufuhrrohrs (3) mindestens ein Heizelement (11) angeordnet ist, mittels dessen das Heizmediumzufuhrrohr (3) zumindest abschnittsweise beheizbar ist.

2. Düsenanordnung (1) nach Anspruch 1, **dadurch gekennzeichnet, dass** sich das mindestens eine Heizelement (9a, 9b, 9c) in vertikaler Richtung bis zum Boden des Düsenkörpers (2) erstreckt.

3. Düsenanordnung (1) nach einem der Ansprüche 1 oder 2,
**dadurch gekennzeichnet, dass** das mindestens eine Heizelement (9a, 9b, 9c) des Düsenkörpers (2) als elektrische Heizpatrone ausgebildet ist.

4. Düsenanordnung (1) nach einem der Ansprüche 1 bis 3,
**dadurch gekennzeichnet, dass** der Düsenkörper (2) mehrere Heizelemente (9a, 9b, 9c) aufweist.

5. Düsenanordnung (1) nach einem der Ansprüche 1 bis 4,
**dadurch gekennzeichnet, dass** das mindestens eine Heizelement (11), das innerhalb des Heizmediumzufuhrrohrs (3) angeordnet ist, als Heizspirale oder Heizdraht ausgebildet ist.

6. Düsenanordnung (1) nach einem der Ansprüche 1 bis 5,
**dadurch gekennzeichnet, dass** innerhalb des Heizmediumzufuhrrohrs (3) ein Isolationsmittel angeordnet ist, das sich zwischen dem mindestens einen Heizelement (11) und einer inneren Wandung des Heizmediumzufuhrrohrs (3) erstreckt.

7. Düsenanordnung (1) nach einem der Ansprüche 1 bis 6,
**dadurch gekennzeichnet, dass** das Isolationsmittel durch ein hochtemperaturfestes, vorzugsweise zylindrisches, Keramikelement (10) gebildet ist.

8. Düsenanordnung (1) nach einem der Ansprüche 1 bis 6,
**dadurch gekennzeichnet, dass** das Isolationsmittel durch eine Mehrzahl hochtemperaturfester, vorzugsweise ringförmiger, Keramikelemente (10) gebildet ist, die in axialer Richtung des Heizmediumzufuhrrohrs (3) nebeneinander angeordnet sind.

9. Düsenanordnung (1) nach einem der Ansprüche 1 bis 8,
**dadurch gekennzeichnet, dass** das Heizmediumzufuhrrohr (3) zumindest eine Durchführung (30, 31) aufweist, durch die sich zumindest ein elektrischer Leitungsabschnitt (110, 111) des Heizelements (11) des Heizmediumzufuhrrohrs (3) hindurch erstreckt.

10. Düsenanordnung (1) nach Anspruch 9, **dadurch gekennzeichnet, dass** die mindestens eine Durchführung (30, 31) mit einem Hochtemperatur-Zementwerkstoff (12) oder einem Hochtemperatur-Kunststoff abgedichtet und verschlossen ist.

11. Düsenanordnung (1) nach einem der Ansprüche 1 bis 10,
**dadurch gekennzeichnet, dass** das mindestens eine Heizelement (11) des Heizmediumzufuhrrohrs (3) hinsichtlich seiner thermischen Leistung so dimensioniert ist, dass es ein unter Druck stehendes, nicht vorerwärmtes Heizmedium, das durch das Heizmediumzufuhrrohr (3) strömt, zumindest auf seine Solltemperatur, mit der es aus den Luftaustrittsöffnungen (40) austritt und den Kantenstreifen beaufschlagt, erhitzen kann.

12. Düsenanordnung (1) nach einem der Ansprüche 1 bis 11 oder nach dem Oberbegriff des Anspruchs 1, **dadurch gekennzeichnet, dass** der Düsenkörper (2) auf seiner Rückseite (25), die der Vorderseite (23) gegenüberliegt, zumindest eine dritte Gruppe (4c) von Luftaustrittsöffnungen (41) aufweist, die vorzugsweise in vertikaler Richtung voneinander beabstandet übereinander angeordnet sind.

13. Düsenanordnung (1) nach Anspruch 12, **dadurch gekennzeichnet, dass** die Luftaustrittsöffnungen (41) der dritten Gruppe (4c) mittels des Verschlussorgans (6a, 6b) der ersten Gruppe (4a) oder zweiten Gruppe (4b) selektiv geöffnet oder geschlossen werden können, so dass die Ausströmung des Heizmediums auf der Rückseite (25) des Düsenkörpers (2) an unterschiedliche Breiten des zugeführten Werkstücks angepasst werden kann.

14. Düsenanordnung (1) nach Anspruch 12, **dadurch gekennzeichnet, dass** die Luftaustrittsöffnungen (41) der dritten Gruppe (4c) mittels eines diesen zugeordneten Verschlussorgans selektiv geöffnet oder geschlossen werden können, so dass die Ausströmung des Heizmediums auf der Rückseite (25) des Düsenkörpers (2) an unterschiedliche Breiten des zugeführten Werkstücks angepasst werden kann.

15. Kantenstreifenaufbringvorrichtung, umfassend mindestens eine Düsenanordnung nach einem der Ansprüche 1 bis 14.

## Claims

1. Nozzle arrangement (1) for an edge strip application device for acting on an edge strip or workpiece which is adhesive-free, thermally activatable or coated with hot melt adhesive with a heat medium, in particular with hot air, comprising a nozzle body (2) having
- at least one air inlet region (20) which is connected to a heat medium supply pipe (3) so that a heat medium which is under pressure, in particular hot air, can be supplied to the nozzle body (2) during operation of the edge strip application device,
- at least two groups (4a, 4b) of air outlet openings (40), wherein the air outlet openings (40) are constructed at a front side (23) of the nozzle body (2) facing the edge strip with spacing from each other in a vertical direction perpendicular to a feed direction of the edge strip and are in flow connection with the at least one air inlet region (20) so that the at least two groups (4a, 4b) of air outlet openings (40) are spaced apart from each other in the feed direction of the edge strip and the heat medium which is supplied to the nozzle body (2) can flow out of the air outlet openings (40) and can act on a thermally activatable functional layer of the edge strip (2),
- a number of closure members (6a, 6b) which corresponds to the number of groups (4a, 4b) of air outlet openings (40) at the front side (23), which closure members are constructed in such a manner that at least some of the air outlet openings (40) can be selectively opened or closed so that the outflow of the heat medium can be adapted to different widths of the supplied edge strip, **characterised in that** within the nozzle body (2) there is arranged at least one heating element (9a, 9b, 9c) by means of which the nozzle body (2) can be heated, and/or **in that** within the heat medium supply pipe (3) there is arranged at least one heating element (11) by means of which the heat medium supply pipe (3) can be at least partially heated.

2. Nozzle arrangement (1) according to claim 1, **characterised in that** the at least one heating element (9a, 9b, 9c) extends in a vertical direction as far as the base of the nozzle body (2).

3. Nozzle arrangement (1) according to either claim 1 or 2, **characterised in that** the at least one heating element (9a, 9b, 9c) of the nozzle body (2) is constructed as an electric heating cartridge.

4. Nozzle arrangement (1) according to any one of claims 1 to 3, **characterised in that** the nozzle body (2) has a plurality of heating elements (9a, 9b, 9c).

5. Nozzle arrangement (1) according to any one of claims 1 to 4, **characterised in that** the at least one heating element (11) which is arranged inside the heat medium supply pipe (3) is constructed as a heating coil or heating wire.

6. Nozzle arrangement (1) according to any one of claims 1 to 5, **characterised in that** within the heat medium supply pipe (3) there is arranged an insulation means which extends between the at least one heating element (11) and an inner wall of the heat medium supply pipe (3).

7. Nozzle arrangement (1) according to any one of claims 1 to 6, **characterised in that** the insulation means is formed by a high-temperature-resistant, preferably cylindrical ceramic element (10).

8. Nozzle arrangement (1) according to any one of claims 1 to 6, **characterised in that** the insulation means is formed by a plurality of high-temperature-resistant, preferably annular ceramic elements (10) which are arranged beside each other in an axial direction of the heat medium supply pipe (3).

9. Nozzle arrangement (1) according to any one of claims 1 to 8, **characterised in that** the heat medium supply pipe (3) has at least one passage (30, 31) through which at least one electrical line portion (110, 111) of the heating element (11) of the heat medium supply pipe (3) extends.

10. Nozzle arrangement (1) according to claim 9, **characterised in that** the at least one passage (30, 31) is sealed and closed with a high-temperature cement material (12) or a high-temperature plastics material.

11. Nozzle arrangement (1) according to any one of claims 1 to 10, **characterised in that** the at least one heating element (11) of the heat medium supply pipe (3) is sized with respect to the thermal capacity thereof in such a manner that it can heat a pressurised, non-pre-heated heat medium which flows through the heat medium supply pipe (3) at least to the desired temperature thereof at which it is discharged from the air outlet openings (40) and acts on the edge strip.

12. Nozzle arrangement (1) according to any one of claims 1 to 11 or according to the preamble of claim 1, **characterised in that** the nozzle body (2) has at the rear side (25) thereof which is opposite the front side (23) at least a third group (4c) of air outlet openings (41) which are preferably arranged one above the other in a vertical direction spaced apart from each other.

13. Nozzle arrangement (1) according to claim 12, **characterised in that** the air outlet openings (41) of the third group (4c) can be selectively opened or closed by means of the closure member (6a, 6b) of the first group (4a) or the second group (4b) so that the outflow of the heat medium at the rear side (25) of the nozzle body (2) can be adapted to different widths of the supplied workpiece.

14. Nozzle arrangement (1) according to claim 12, **characterised in that** the air outlet openings (41) of the third group (4c) can be selectively opened or closed by means of a closure member which is associated therewith so that the outflow of the heat medium at the rear side (25) of the nozzle body (2) can be adapted to different widths of the supplied workpiece.

15. Edge strip application device, comprising at least one nozzle arrangement according to any one of claims 1 to 14.

## Revendications

1. Agencement de buse (1) destiné à un dispositif d'application de bandes de bords afin d'amener un fluide de chauffage, en particulier de l'air chaud, à une bande de bord ou pièce sans adhésif, pouvant être activée de façon thermique ou munie d'un revêtement thermocollant,
comprenant un corps de buse (2) avec
- au moins une zone d'admission d'air (20), qui est raccordée à un tuyau d'alimentation de fluide de chauffage (3), de telle sorte qu'un fluide de chauffage, en particulier de l'air chaud, sous pression peut être amené au corps de buse (2) pendant le fonctionnement du dispositif d'application de bandes de bords,
- au moins deux groupes (4a, 4b) d'orifices de sortie d'air (40), dans lesquels les orifices de sortie d'air (40) sont réalisés sur une façade avant (23), proche de la bande de bord, du corps de buse (2) à une certaine distance les uns des autres dans la direction verticale perpendiculaire à une direction d'avance de la bande de bord et sont en liaison d'écoulement avec l'au moins une zone d'admission d'air (20), de telle sorte que les au moins deux groupes (4a, 4b) d'orifices de sortie d'air (40) sont à une certaine distance l'un de l'autre dans la direction d'avance de la bande de bord et que le fluide de chauffage amené au corps de buse (2) peut s'écouler hors des orifices de sortie d'air (40) et peut arriver sur une couche fonctionnelle pouvant être activée de façon thermique de la bande de bord (2),
- un nombre, correspondant au nombre des groupes (4a, 4b) d'orifices de sortie d'air (40) sur la façade avant (23), d'organes d'obturation (6a, 6b), qui sont réalisés de telle sorte qu'au moins quelques-uns des orifices de sortie d'air (40) peuvent être ouverts ou fermés sélectivement, de telle sorte que le débit du fluide de chauffage peut être adapté à différentes largeurs de la bande de bord amenée,
**caractérisé en ce qu'**au moins un élément de chauffage (9a, 9b, 9c) est agencé à l'intérieur du corps de buse (2), élément de chauffage au moyen duquel le corps de buse (2) peut être chauffé,
et/ou **en ce qu'**au moins un élément de chauffage (11) est agencé à l'intérieur du tuyau d'alimentation de fluide de chauffage (3), élément de chauffage au moyen duquel le tuyau d'alimentation de fluide de chauffage (3) peut être chauffé au moins par endroits.

2. Agencement de buse (1) selon la revendication 1, **caractérisé en ce que** l'au moins un élément de chauffage (9a, 9b, 9c) s'étend dans la direction verticale jusqu'au fond du corps de buse (2).

3. Agencement de buse (1) selon l'une des revendications 1 ou 2, **caractérisé en ce que** l'au moins un élément de chauffage (9a, 9b, 9c) du corps de buse (2) est réalisé sous forme de cartouche chauffante.

4. Agencement de buse (1) selon l'une des revendications 1 à 3, **caractérisé en ce que** le corps de buse (2) comporte plusieurs éléments de chauffage (9a, 9b, 9c).

5. Agencement de buse (1) selon l'une des revendications 1 à 4, **caractérisé en ce que** l'au moins un élément de chauffage (11) qui est agencé à l'intérieur du tuyau d'alimentation de fluide de chauffage (3) est réalisé sous forme de spirale chauffante ou de fil chauffant.

6. Agencement de buse (1) selon l'une des revendications 1 à 5, **caractérisé en ce qu'**un moyen isolant est agencé à l'intérieur du tuyau d'alimentation de fluide de chauffage (3), lequel moyen isolant s'étend entre l'au moins un élément de chauffage (11) et une paroi intérieure du tuyau d'alimentation de fluide de chauffage (3).

7. Agencement de buse (1) selon l'une des revendications 1 à 6, **caractérisé en ce que** le moyen isolant est formé par un élément en céramique (10) résistant à de hautes températures et de préférence cylindrique.

8. Agencement de buse (1) selon l'une des revendications 1 à 6, **caractérisé en ce que** le moyen isolant est formé par une multiplicité d'éléments en céramique (10), résistants à de hautes températures et de préférence annulaires, qui sont agencés les uns à côté des autres dans la direction axiale du tuyau d'alimentation de fluide de chauffage (3).

9. Agencement de buse (1) selon l'une des revendications 1 à 8, **caractérisé en ce que** le tuyau d'alimentation de fluide de chauffage (3) comporte au moins une traversée (30, 31) à travers laquelle s'étend au moins un tronçon de ligne électrique (110, 111) de l'élément de chauffage (11) du tuyau d'alimentation de fluide de chauffage (3).

10. Agencement de buse (1) selon la revendication 9, **caractérisé en ce que** l'au moins une traversée (30, 31) est fermée et rendue étanche avec un ciment à hautes températures (12) ou avec un plastique à hautes températures.

11. Agencement de buse (1) selon l'une des revendications 1 à 10, **caractérisé en ce que** l'au moins un élément de chauffage (11) du tuyau d'alimentation de fluide de chauffage (3) est dimensionné de telle sorte, quant à sa puissance thermique, qu'il peut chauffer un fluide de chauffage non préchauffé, qui est sous pression et qui s'écoule dans le tuyau d'alimentation de fluide de chauffage (3), au moins à sa température de consigne avec laquelle il sort des orifices de sortie d'air (40) et arrive sur les bandes de bords.

12. Agencement de buse (1) selon l'une des revendications 1 à 11 ou selon le préambule de la revendication 1, **caractérisé en ce que** le corps de buse (2) comporte sur sa façade arrière (25), qui est à l'opposé de la façade avant (23), au moins un troisième groupe (4c) d'orifices de sortie d'air (41) qui sont agencés de préférence à une certaine distance les uns au-dessus des autres dans la direction verticale.

13. Agencement de buse (1) selon la revendication 12, **caractérisé en ce que** les orifices de sortie d'air (41) du troisième groupe (4c) peuvent être ouverts ou fermés sélectivement au moyen de l'organe d'obturation (6a, 6b) du premier groupe (4a) ou du deuxième groupe (4b), de telle sorte que le débit du fluide de chauffage sur la façade arrière (25) du corps de buse (2) peut être adapté à différentes largeurs de la pièce amenée.

14. Agencement de buse (1) selon la revendication 12, **caractérisé en ce que** les orifices de sortie d'air (41) du troisième groupe (4c) peuvent être ouverts ou fermés sélectivement au moyen d'un organe d'obturation associé à celles-ci, de telle sorte que le débit du fluide de chauffage sur la façade arrière (25) du corps de buse (2) peut être adapté à différentes largeurs de la pièce amenée.

15. Dispositif d'application de bandes de bords, comprenant au moins un agencement de buse selon l'une des revendications 1 à 14.
